# EUROPÄISCHE PATENTSCHRIFT

(11) **EP 0 894 107 B1**
(45) Veröffentlichungstag und Bekanntmachung des Hinweises auf die Patenterteilung: **22.12.1999**
(21) Anmeldenummer: 97917294.7
(22) Anmeldetag: 07.04.1997
(51) Int. Cl.: C08G 61/00, C09K 11/06

(54) **VERBINDUNGEN MIT SPIROATOMEN UND IHRE VERWENDUNG ALS ELEKTROLUMINESZENZMATERIALIEN**
COMPOUNDS WITH SPIRO ATOMS AND THEIR USE AS ELECTROLUMINESCENT MATERIALS
COMPOSES A SPIRO-ATOMES ET LEUR UTILISATION COMME MATERIAUX ELECTROLUMINESCENTS

(30) Priorität: 17.04.1996 DE 19614971
(43) Veröffentlichungstag der Anmeldung: 03.02.1999
(73) Patentinhaber: Aventis Research & Technologies GmbH & Co KG, 65926 Frankfurt am Main (DE)
(72) Erfinder: KREUDER, Willi, D-55126 Mainz (DE); SPREITZER, Hubert, D-65926 Frankfurt am Main (DE)
(86) Internationale Anmeldenummer: EP9701717
(87) Internationale Veröffentlichungsnummer: WO9739045

(56) Entgegenhaltungen:
- EP-A- 0 676 461
- EP-A- 0 707 020

## Beschreibung

Es besteht ein hoher industrieller Bedarf an großflächigen Festkörper-Lichtquellen für eine Reihe von Anwendungen, überwiegend im Bereich von Anzeigeelementen, der Bildschirmtechnologie und der Beleuchtungstechnik. Die an diese Lichtquellen gestellten Anforderungen können zur Zeit von keiner der bestehenden Technologien völlig befriedigend gelöst werden.

Als Alternative zu herkömmlichen Anzeige- und Beleuchtungselementen, wie Glühlampen, Gasentladungslampen und nicht selbstleuchtenden Flüssigkristallanzeigeelementen, sind bereits seit einiger Zeit Elektrolumineszenz(EL)materialien und -vorrichtungen, wie lichtemittierende Dioden (LED), in Gebrauch.

Neben anorganischen sind seit etwa 30 Jahren auch niedermolekulare organische Elektrolumineszenzmaterialien und -vorrichtungen bekannt (siehe z.B. US-A-3,172,862). Bis vor kurzem waren aber solche Vorrichtungen in ihrer praktischen Verwendbarkeit stark eingeschränkt.

In WO 90/13148 und EP-A 0-443 861 sind Elektrolumineszenzvorrichtungen beschrieben, die einen Film aus einem konjugierten Polymer als lichtemittierende Schicht (Halbleiterschicht) enthalten. Solche Vorrichtungen bieten zahlreiche Vorteile wie die Möglichkeit, großflächige, flexible Displays einfach und kostengünstig herzustellen. Im Gegensatz zu Flüssigkristalldisplays sind Elektrolumineszenzdisplays selbstleuchtend und benötigen daher keine zusätzliche rückwärtige Beleuchtungsquelle.

Eine typische Vorrichtung nach WO 90/13148 besteht aus einer lichtemittierenden Schicht in Form eines dünnen, dichten Polymerfilms (Halbleiterschicht), der wenigstens ein konjugiertes Polymer enthält. Eine erste Kontaktschicht steht in Kontakt mit einer ersten Oberfläche, eine zweite Kontaktschicht mit einer weiteren Oberfläche der Halbleiterschicht. Der Polymerfilm der Halbleiterschicht hat eine genügend geringe Konzentration von extrinsischen Ladungsträgern, so daß beim Anlegen eines elektrischen Feldes zwischen den beiden Kontaktschichten Ladungsträger in die Halbleiterschicht eingebracht werden, wobei die eine Kontaktschicht positiv gegenüber der anderen wird, und die Halbleiterschicht Strahlung aussendet. Die in solchen Vorrichtungen verwendeten Polymere sind konjugiert. Unter konjugiertem Polymer versteht man ein Polymer, das ein delokalisiertes Elektronensystem entlang der Hauptkette besitzt. Das delokalisierte Elektronensystem verleiht dem Polymer Halbleitereigenschaften und gibt ihm die Möglichkeit, positive und/oder negative Ladungsträger mit hoher Mobilität zu transportieren.

In WO 90/13148 wird als polymeres Material für die lichtemittierende Schicht Poly(p-phenylenvinylen) verwendet, und es wird vorgeschlagen, die Phenylgruppe in einem solchen Material durch ein heterocyclisches oder ein kondensiertes carbacyclisches Ringsystem zu ersetzen. Daneben wird auch Poly(p-phenylen), PPP, als elektrolumineszierendes Material verwendet.

Obwohl mit diesen Materialien gute Ergebnisse erzielt wurden, ist beispielsweise die Farbreinheit noch unbefriedigend. Weiterhin ist es mit den bisher bekannten Polymeren kaum möglich, eine blaue oder weiße Emission zu erzeugen.

Da zudem die Entwicklung von Elektrolumineszenzmaterialien, insbesondere auf Grundlage von Polymeren, noch in keiner Weise als abgeschlossen betrachtet werden kann, sind die Hersteller von Beleuchtungs- und Anzeigevorrichtungen an den unterschiedlichsten Elektrolumineszenzmaterialien für solche Vorrichtungen interessiert.

Dies liegt unter anderem auch daran, weil erst das Zusammenwirken der Elektrolumineszenzmaterialien mit den weiteren Bauteilen der Vorrichtungen Rückschlüsse auf die Qualität auch des Elektrolumineszenzmaterials zuläßt.

Aufgabe der vorliegenden Erfindung war es daher, neue Elektrolumineszenzmaterialien bereitzustellen, die bei Verwendung in Beleuchtungs- oder Anzeigevorrichtungen geeignet sind, das Eigenschaftsprofil dieser Vorrichtungen zu verbessern.

Verbindungen, bei denen zwei Polymere über ein einziges Spirozentrum verknüpft sind, sind beispielsweise in US-A 5,026,894 und bei J. M. Tour et al., J. Am. Chem. Soc. 1990, 112, 5662; J. M. Tour et al., J. Am. Chem. Soc. 1991, 113, 7064 und J. M. Tour et al., Polym. Prepr. 1990, 408 als Materialien für molekulare Elektronik vorgeschlagen. Eine mögliche Eignung solcher Verbindungen als Elektrolumineszenzmaterialien läßt sich daraus nicht ableiten.

In der EP-A-0 676 461 sind niedermolekulare Spiroverbindungen zur Verwendung als Elektrolumineszenzmaterialien beschrieben. Das Eigenschaftsprofil dieser Verbindungen läßt aber noch durchaus Raum für Verbesserungen.

Es wurde nun überraschend gefunden, daß sich bestimmte konjugierte Verbindungen, die mehrere Spirozentren enthalten, in besonderer Weise als Elektrolumineszenzmaterialien eignen.

Gegenstand der Erfindung sind daher konjugierte Verbindungen, enthaltend Struktureinheiten der Formel (I) 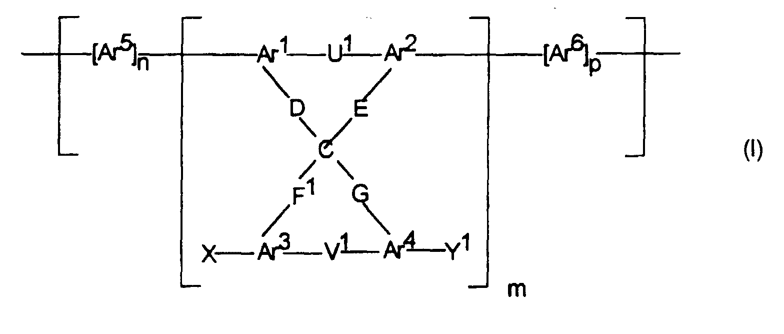 wobei die Symbole und Indizes folgende Bedeutungen haben:
- D, E, F¹, G: sind gleich oder verschieden -CR¹R¹-, -O-, -S-, -NR³- oder eine chemische Bindung;
- Ar¹, Ar²: sind gleich oder verschieden Benzol-triyl, Thiophen-triyl, Furan-triyl, Pyrrol-triyl, Pyridin-triyl, Pyrimidin-triyl, Pyrazin-triyl oder Pyridazin-triyl, wobei jede dieser Gruppen unabhängig voneinander mit 1 bis 3, vorzugsweise 1, gleichen oder verschiedenen Resten R⁴ substituiert sein kann;
- Ar³, Ar⁴: haben gleich oder verschieden die bei Ar¹, Ar² angegebenen Bedeutungen oder sind Cyclohexan-triyl, Cyclopentan-triyl, Cyclohexentriyl oder Cyclopenten-triyl, wobei jede dieser Gruppen unabhängig voneinander mit 1 bis 3 gleichen oder verschiedenen Resten R⁴ substituiert sein kann;
- U¹, V¹: sind gleich oder verschieden -CR⁵=CR⁶-, -CR⁷R⁸-, -CR⁹R¹⁰-CR¹¹R¹²-, -NR¹³-, -SiR¹⁴R¹⁵-, -O-, -S-, -SO-, -SO₂-, -CO- oder eine chemische Bindung;
- Ar⁵, Ar⁶, X, Y¹: sind gleich oder verschieden cyclische oder acyclische, konjugierte Kohlenwasserstoffe mit 2 bis 100, vorzugsweise 2 bis 20, Kohlenstoffatomen, die auch Heteroatome, vorzugsweise 0, N und/oder S, enthalten können und die durch einen oder mehrere Reste R⁴ substituiert sein können, X und/oder Y¹ können auch gleich oder verschieden H oder R¹ sein;
- R¹,R²,R⁵,R⁶,R⁷,R⁸,R⁹,R¹⁰,R¹¹,R¹²: sind gleich oder verschieden H, eine geradkettige oder verzweigte Alkylgruppe mit 1 bis 22 C-Atomen, wobei eine oder mehrere vorzugsweise eine, -CH₂-Gruppen durch -O-, -CO-O-, -O-CO- oder ersetzt sein können und wobei ein oder mehrere Wasserstoffatome durch F ersetzt sein können, eine Aryl- oder Aryloxygruppe mit vorzugsweise 2 bis 20 C-Atomen, vorzugsweise Phenyl oder Phenyloxy, die auch Heteroatome, vorzugsweise N, S und/oder O enthalten kann, und die mit einem oder mehreren Resten R⁶ substituiert sein kann, Br, Cl, F, CN, NO₂, CF₃, wobei R¹ und R², R⁷ und R⁸, R⁹ und R¹⁰ sowie R¹¹ und R¹² jeweils zusammen ein Ringsystem bilden können;
- R³, R¹⁴, R¹⁵: sind gleich oder verschieden H oder, bevorzugt, eine geradkettige oder verzweigte Alkylgruppe mit 1 bis 22 C-Atomen, wobei auch eine oder mehrere, nicht direkt an N gebundene, CH₂-Gruppen durch -O-, -CO-O-, -O-CO- ersetzt sein können, eine Arylgruppe mit vorzugsweise 2 bis 20 C-Atomen, die auch Heteroatome, vorzugsweise N, S und/oder O enthalten kann, und die mit einem oder mehreren, gleichen oder verschienen Resten R⁴ substituiert sein kann;
- R⁴: ist gleich oder verschieden F, Cl, Br, CN, NO₂, CF₃ oder eine geradkettige oder verzweigte Alkylgruppe mit 1 bis 22 C-Atomen, bei der auch eine oder mehrere, nicht direkt aneinander gebundene CH₂-Gruppen durch -O-, -CO-O-, -O-CO- ersetzt sein können und wobei auch ein oder mehrere H-Atome durch F ersetzt sein können;
- m: ist 1, 2, 3 oder 4, vorzugsweise 1;
- n, p: sind gleich oder verschieden 0, 1, 2, 3 oder 4, vorzugsweise 0 oder 1;
wobei folgende Verbindungen ausgenommen sind:
a) Verbindungen, bei denen Ar¹, Ar², Ar³ und Ar⁴ Benzol-triyl sind, D, E, F¹, G, U¹ und V¹ Einfachbindungen sind und X und Y¹ cyclische oder acyclische, konjugierte Kohlenwasserstoffe sind, die auch Heteroatome enthalten können und die auch substituiert sein können, und
b) Poly[2,7-(9,9'-spirobifluorenylen)-4,4'-biphenylen] 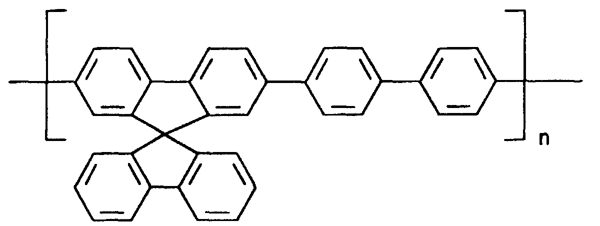 und
   Poly-2,7-(9,9'-spirobifluoren)ylen 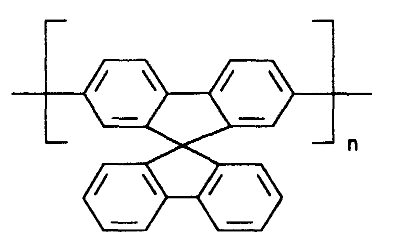
Bevorzugt sind konjugierte Verbindungen, enthaltend Strukturelemente der Formel (I), bei denen die Symbole und Indizes folgende Bedeutungen haben:
- Ar⁵, Ar⁶: sind gleich oder verschieden jeweils eine bis 5 gleiche oder verschiedene Arylen- und/oder Heteroarylen- und/oder Vinylengruppen, die gegebenenfalls substituiert sein können;
- m: ist 1 und
- n, p: sind gleich oder verschieden 0 oder 1
wobei die obengenannten Verbindungen ausgenommen sind.

Die erfindungsgemäßen Verbindungen, enthaltend Struktureinheiten der Formel (I) zeichnen sich insbesondere durch eine hohe Farbreinheit der Emission aus.

Polymer bedeutet im Sinne der Erfindung eine Verbindung, deren Elektrolumineszenzspektrum bei Anfügen weiterer Wiederholeinheiten im wesentlichen gleich bleibt.

Spiroverbindungen sind Verbindungen in denen zwei Ringsysteme durch ein einziges, vierbindiges Atom verknüpft sind. Dieses Atom wird als Spiroatom bezeichnet, wie in Handbook of Chemistry and Physics 62^{nd} ed. (1981-2), CRC Press, Seite C-23 bis C-25 ausgeführt.

Die erfindungsgemäßen konjugierten Verbindungen, enthaltend Struktureinheiten der Formel (I), weisen im allgemeinen 2 bis 1000, vorzugsweise 4 bis 500, besonders bevorzugt 10 bis 100, Struktureinheiten der Formel (I) auf.

Bevorzugt sind weiterhin solche konjugierten Verbindungen, enthaltend Struktureinheiten allgemeinen Formel (I), bei denen die Symbole und Indizes folgende Bedeutungen haben:
- Ar¹, Ar², Ar³, Ar⁴: sind gleich oder verschieden Benzol-triyl, Pyridin-triyl, Thiophen-triyl, Pyrazin-triyl oder Pyrimidin-triyl;
- Ar⁵, Ar⁶: sind gleich oder verschieden 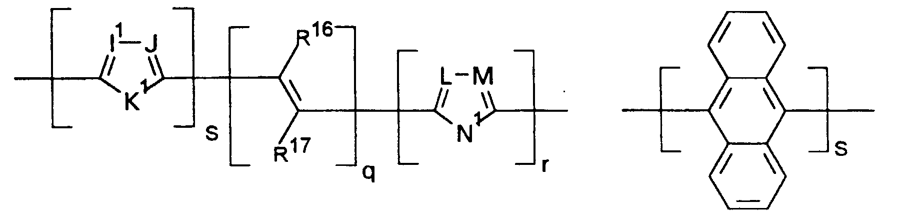 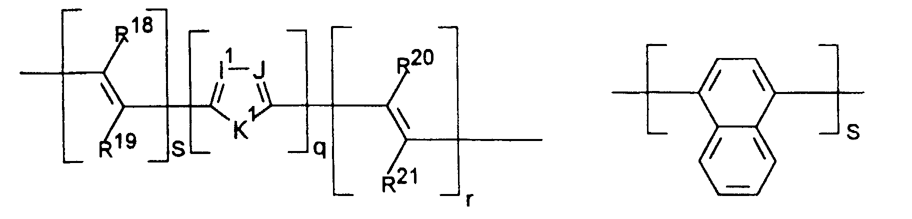 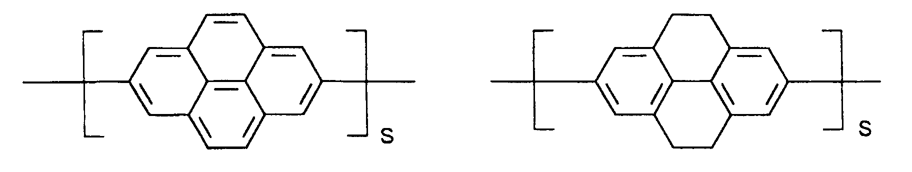 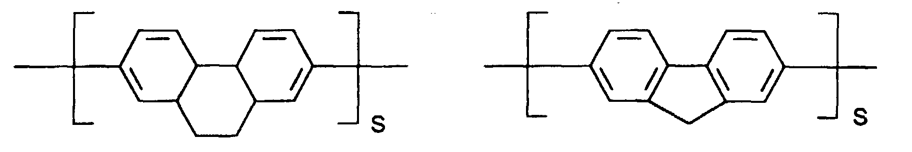
- X, Y¹: sind gleich oder verschieden H, eine geradkettige oder verzweigte Alkylgruppe mit 1 bis 22 C-Atomen, wobei eine oder mehrere -CH₂-Gruppen durch -O-, -CO-O-, -O-CO- ersetzt sein können und wobei ein oder mehrere Wasserstoffatome durch F ersetzt sein können, Br, Cl, F, CN, NO₂, CF₃ oder 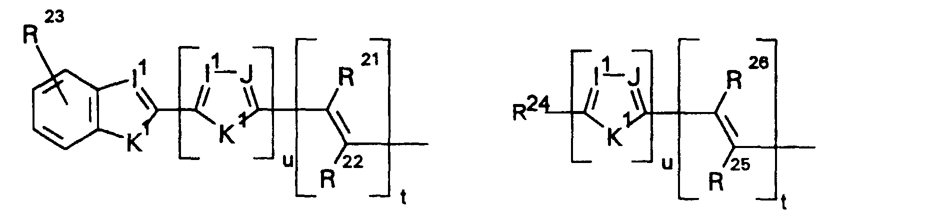 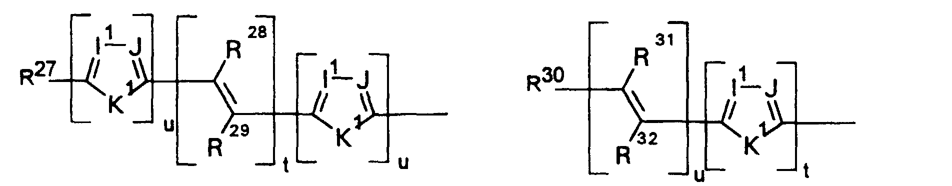 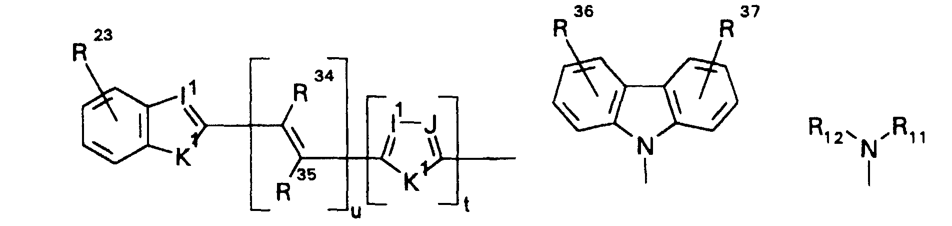
- I¹, J, L, M: sind gleich oder verschieden =CR³⁸-, =N-;
- K¹, N¹: sind gleich oder verschieden -O-, -S-, CR³⁹R⁴⁰, -CR⁴¹=CR⁴²-, -NR⁴³-, -CR⁴⁴ = N-;
- R¹⁶-R⁴²: sind gleich oder verschieden und haben, gleich oder verschieden von R¹ die gleichen Bedeutungen wie R¹ in der Formel (I);
- R⁴³, R⁴⁴: sind gleich oder verschieden und haben gleich oder verschieden von R³ die gleichen Bedeutungen wie R³ in der Formel (I);
- q, r, s, t, u: sind gleich oder verschieden 0, 1, 2, 3, 4 oder 5, wobei die oben angegebenen Verbindungen ausgenommen sind.

Besonders bevorzugt sind konjugierte Verbindungen, enthaltend Struktureinheiten der Formel (I), bei denen gilt:
- Ar⁵, Ar⁶: sind gleich oder verschieden 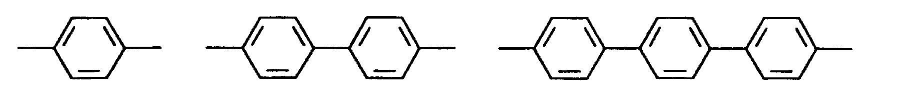 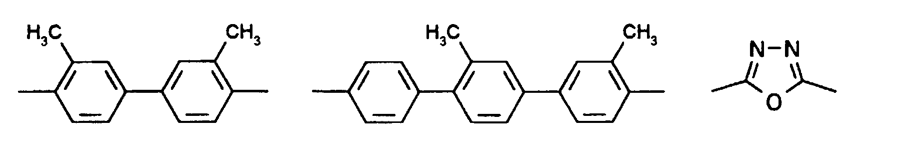 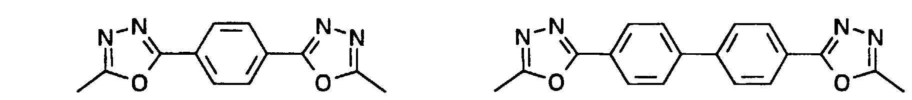 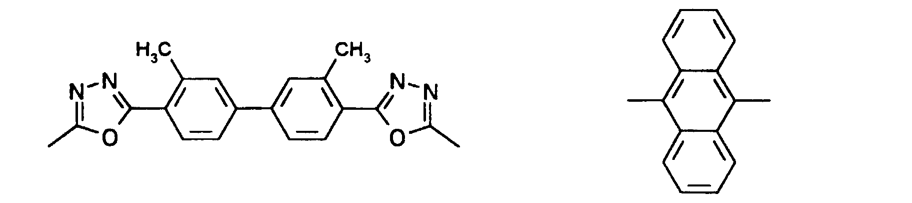
- n, p: sind gleich oder verschieden 0 oder 1;
- X, Y¹: sind gleich oder verschieden H, oder eine geradkettige oder verzweigte Alkylgruppe mit 1 bis 22 C-Atomen, wobei eine oder mehrere -CH₂-Gruppen durch -O-, -CO-O-, -O-CO- ersetzt sein können und wobei ein oder mehrere Wasserstoffatome durch F ersetzt sein können, Br, Cl, F, CN, NO₂, CF₃ oder 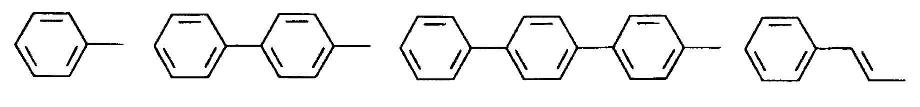 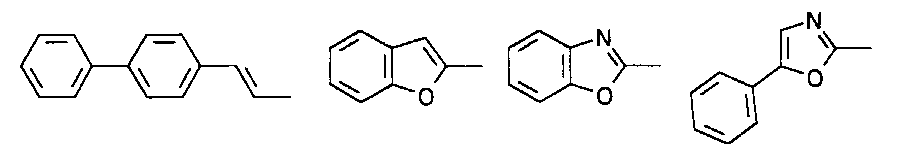 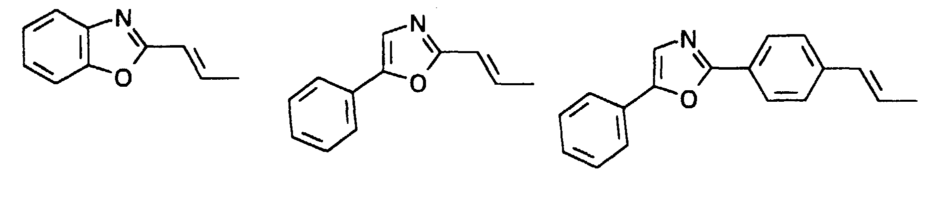 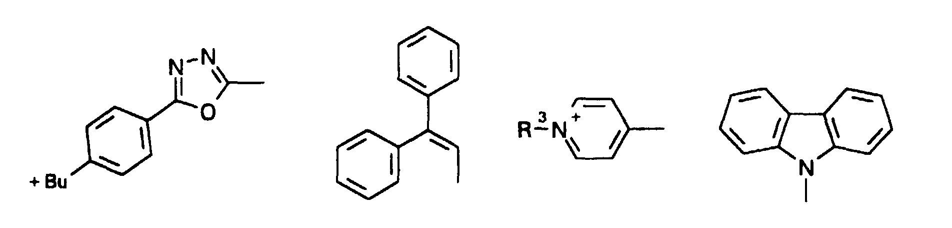 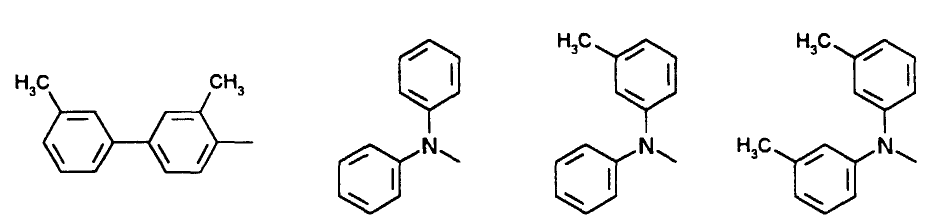
, wobei die obengenannten Verbindungen ausgenommen sind.

Ganz besonders bevorzugt sind konjugierte Verbindungen, enthaltend Struktureinheiten der Formel (I), bei denen gilt
- Ar⁵, Ar⁶: sind gleich oder verschieden 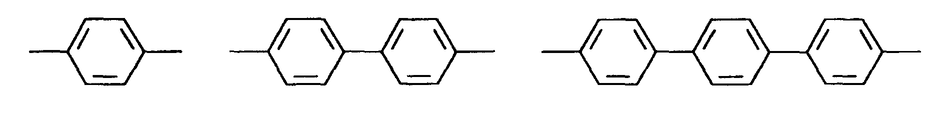 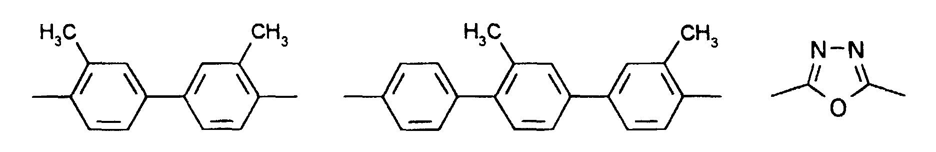 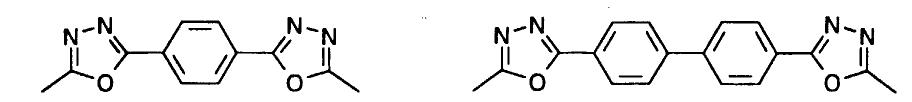 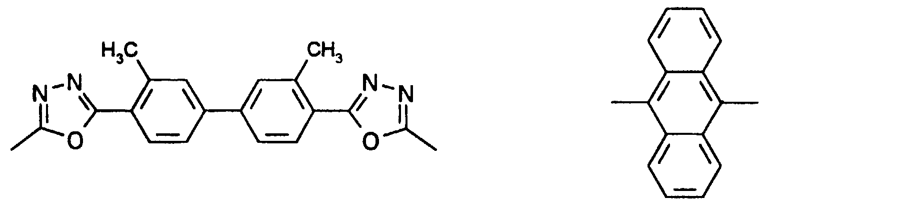
- n + p: ist 0 oder 1;
- X, Y¹: sind gleich oder verschieden H, oder eine geradkettige oder verzweigte Alkylgruppe mit 1 bis 22 C-Atomen, wobei eine oder mehrere -CH₂-Gruppen durch -O-, -CO-O-, -O-CO- ersetzt sein können und wobei ein oder mehrere Wasserstoffatome durch F ersetzt sein können, Br, Cl, F, CN, NO₂, CF₃ oder 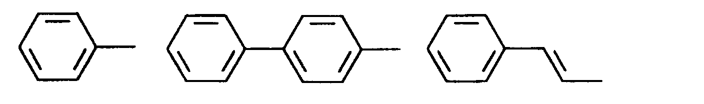 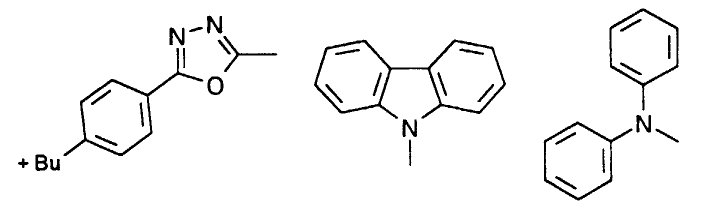
, wobei die obengenannten Verbindungen ausgenommen sind.

Für einige Anwendungen kann es vorteilhaft sein, eines, mehrere oder alle Wasserstoffatome, bevorzugt solche an aromatischen Ringen, durch F-Atome zu ersetzen.

Die erfindungsgemäßen konjugierten Verbindungen, enthaltend Struktureinheiten der Formel (I) sind Homo- oder Copolymere, d.h., daß sie auch unterschiedliche Wiederholeinheiten der Formel (I) aufweisen können.

Vorzugsweise bestehen die erfindungsgemäßen konjugierten Verbindungen aus Struktureinheiten der Formel (I).

Die erfindungsgemäßen Verbindungen zeichnen sich weiterhin durch eine beträchtliche Steigerung der Löslichkeit in organischen Solventien und gute Filmbildungseigenschaften aus. Dadurch wird die Herstellung von Elektrolumineszenzvorrichtungen erleichtert und ihre Lebensdauer erhöht. Darüber hinaus erlaubt die kovalent gebundene Anordnung der Substituenten über die Spiroatome, senkrecht zur konjugierten Hauptkette, einen molekularen Aufbau in der Weise, daß ohne Störung der Konjugation in der Hauptkette bestimmte Eigenschaften eingestellt werden können. So kann die Polymerkette z.B. Ladungstransport- oder Ladungsinjektionseigenschaften besitzen, während die Substituenten lichtemittierende Eigenschaften besitzen. Die Emissionseigenschaften der erfindungsgemäß eingesetzten Verbindungen können durch die Wahl geeigneter Substituenten über den ganzen Bereich des sichtbaren Spektrums eingestellt werden. Die durch die kovalente Anknüpfung fixierte räumliche Nähe der beiden Hälften ist dabei günstig für die Energieübertragung (siehe z.B. B. Liphardt, W. Lüttke Liebigs Ann. Chem. **1981**, 1118).
Die erfindungsgemäßen Polymere mit Wiederholeinheiten der Formel (I) sind zur Erzielung blauer Elektrolumineszenz gut geeignet.

Die Herstellung der erfindungsgemäßen Verbindungen kann nach an sich literaturbekannten Methoden, wie sie in Standardwerken zur Organischen Synthese, z.B. Houben-Weyl, Methoden der Organischen Chemie, Georg-Thieme-Verlag, Stuttgart und in den Bänden der Serie "The Chemistry of Heterocyclic Compounds, A. Weissberger, E. C. Taylor (eds.), insbesondere Band 13/5, S. 30-87, beschrieben werden, erfolgen.

Die Herstellung erfolgt dabei unter Reaktionsbedingungen, die für die genannten Umsetzungen bekannt und geeignet sind. Dabei kann auch von an sich bekannten, hier nicht näher erwähnten Varianten Gebrauch gemacht werden.

Als Ausgangsverbindungen für die Herstellung der erfindungsgemäßen Verbindungen kommen zum Beispiel Monomere mit einem 4,5-Diaza-9,9'-spirobifluoren- (CAS-Reg.-Nr.: 171856-25-0), einem Spirocyclo(dithiopheno)pentan-4,9'-fluoren-(CAS-Reg.-Nr.: 28687-00-5), einem Spiro-9-fluoren-9'-xanthen- (CAS-Reg.-Nr.: 159-62-6), einem Spiro-dibenzocycloheptan-5,9'-fluoren- (CAS-Reg.-Nr.: 120788-49-0) oder auch einem 9,9'-Spirobixanthen-Baustein (CAS-Reg.-Nr.: 159-49-9) zum Einsatz, die in 2,7- bzw. gegebenenfalls 2',7'-Position substituiert sind.

Eine Methode zur Synthese dieser Monomeren beruht in der Regel auf der Grignardreaktion von beispielsweise 2-Brombiphenyl mit einem entsprechenden cyclischen Keton, wie dies z. B. für das 4,5-Diaza-9,9'-spirobifluoren von P. Piotrowiak et al., Bull. Pol. Acad. Sci., Chem. **1995, 1994**, *42*, 445 beschrieben wird. Für Spiro-9-fluoren-9'-xanthen und 9,9'-Spirobixanthen wird dies analog von R. G. Clarkson und M. Gomberg, J. Am. Chem. Soc. **1930**, *52*, 2881 beschrieben. Für Spiro-5-dibenzocycloheptan-9'-fluoren wird dies von D. Hellwinkel et al., Chem. Ber. **1989**, 122, 1595 beschrieben. Für das Spiro-4-cyclo(dithiopheno)pentan-9'-fluoren ist dies von H. Wynberg et al., Recl. Trav. Chim. Pays-Bas **1970**, 89, 545 beschrieben. Die derart erhaltenen Grundkörper können weiter funktionalisiert werden.

Möglichkeiten zur Funktionalisierung sind in Analogie der verwandten Verbindung 9,9'-Spirobifluoren gegeben; diese sind z. B. beschrieben in J. H. Weisburger, E. K. Weisburger, F. E. Ray, J. Am. Chem. Soc. **1959**, 72, 4253; F. K. Sutcliffe, H. M. Shahidi, D. Paterson, J. Soc. Dyers Colour **1978**, 94, 306; und G. Haas, V. Prelog, Helv. Chim. Acta **1969**, *52*, 1202.

Es kann von Vorteil sein, das gewünschte Substitutionsmuster des gewünschten zentralen Grundkörpers durch Spiroverknüpfung von bereits geeignet substituierten Edukten zu erreichen, z.B. mit 2,7-difunktionalisiertem Xanthenon, und die noch freien 2',7'-Positionen nach Aufbau des Spirozentrums dann gegebenenfalls weiter zu funktionalisieren (z.B. durch Halogenierung oder Acylierung, mit anschließender C-C-Verknüpfung nach Umwandlung der Acetylgruppen in Aldehydgruppen, oder durch Heterocyclenaufbau nach Umwandlung der Acetylgruppen in Carbonsäuregruppen).

Die weitere Funktionalisierung kann nach an sich literaturbekannten Methoden erfolgen, wie sie in Standardwerken zur Organischen Synthese, z.B Houben-Weyl, Methoden der Organischen Chemie, Georg-Thieme Verlag, Stuttgart und in den entsprechenden Bänden der Serie "The Chemistry of Heterocyclic Compounds" von A. Weissberger und E. C. Taylor (Herausgeber) beschrieben werden.

Für die Synthese der Gruppen Ar⁵, Ar⁶, X, Y sei beispielsweise verwiesen auf DE-A 23 44 732, 24 50 088, 24 29 093, 25 02 904, 26 36 684, 27 01 591 und 27 52 975 für Verbindungen mit 1,4-Phenylen-Gruppen DE-A 26 41 724 für Verbindungen mit Pyrimidin-2,5-diyl-Gruppen; DE-A 40 26 223 und EP-A 03 91 203 für Verbindungen mit Pyridin-2,5-diyl-Gruppen; DE-A 32 31 462 für Verbindungen mit Pyridazin-3,6-diyl-Gruppen; N. Miyaura, T. Yanagi und A. Suzuki in Synthetic Communications 1981, 11, 513 bis 519; DE-C 39 30 663; M. J. Sharp, W. Cheng, V. Snieckus in Tetrahedron Letters 1987, 28, 5093; G. W. Gray in J.Chem.Soc. Perkin Trans II 1989, 2041 und Mol. Cryst. Liq. Cryst. 1989, 172, 165, Mol. Cryst. Liq. Cryst. 1991, 204, 43 und 91; EP-A 0 449 015; WO 89/12039; WO 89/03821; EP-A 0 354 434 für die direkte Verknüpfung von Aromaten und Heteroaromaten.

Die Herstellung disubstituierter Pyridine, disubstituierter Pyrazine, disubstituierter Pyrimidine und disubstituierter Pyridazine findet sich beispielsweise in den entsprechenden Bänden der Serie "The Chemistry of Heterocyclic Compounds" von A. Weissberger und E. C. Taylor (Herausgeber).

Ausgehend von den oben angegebenen Monomeren ist die Polymerisation zu den erfindungsgemäßen Polymeren mit Wiederholeinheiten der Formel (I) nach mehreren Methoden möglich.

Beispielsweise können Derivate der o. g. bevorzugten Grundkörper oxidativ (z.B. mit FeCl₃, siehe u.a. P. Kovacic, N. B. Jones, Chem. Ber. 1987, 87, 357 bis 379; M. Weda, T. Abe, H. Awano, Macromolecules 1992, 25, 5125) oder elektrochemisch (siehe z.B. N. Saito, T. Kanbara, T. Sato, T. Yamamoto, Polym. Bull. 1993, 30, 285) polymerisiert werden.

Ebenso können die erfindungsgemäßen Polymere aus 2,7-difunktionalisierten Derivaten hergestellt werden.
Dihalogenaromaten lassen sich unter Kupfer/Triphenylphosphan- (siehe z.B. G. W. Ebert, R. D. Rieke, J. Org. Chem. 1988, 53, 44829 oder
Nickel/Triphenylphosphan-Katalyse (siehe z.B. H. Matsumoto, S. Inaba, R. D. Rieke, J. Org. Chem. 1983, 48, 840) polymerisieren.

Aromatische Diboronsäuren und aromatische Dihalogenide oder gemischte aromatische Halogen-Boronsäuren lassen sich unter Palladiumkatalyse durch Kupplungsreaktionen polymerisieren (siehe z.B. M. Miyaura, T. Yanagi, A. Suzuki, Synth. Commun. 1981, 11, 513; R. B. Miller, S. Dugar, Organometallics 1984, 3, 1261).

Aromatische Distannane lassen sich z.B., wie bei J. K. Stille, Angew. Chem. Int. Ed. Engl. 1986, 25, 508 angegeben, unter Palladiumkatalyse polymerisieren.

Weiterhin können die oben erwähnten Dibromverbindungen in die Dilithio- oder Digrignardverbindungen übergeführt werden, die dann mit weiterer Dibromverbindung mittels CuCl₂ (siehe z.B. G. Wittig, G. Klar, Liebigs Ann. Chem. 1967, 704, 91; H. A. Staab, F. Bunny, Chem. Ber. 1967, 100, 293; T. Kaufmann, Angew. Chem. 1974, 86, 321 bis 354) oder durch Elektronentransfer ungesättigter 1,4-Dihalogenverbindungen (siehe z.B. S. K. Taylor, S. G. Bennett, K. J. Harz, L. K. Lashley, J. Org. Chem. 1981, 46, 2190) polymerisiert werden.

Die Synthese der erfindungsgemäßen Polymeren mit Wiederholeinheiten der Formel (I) kann aber auch durch Polymerisation eines 2,7-difunktionalisierten Derivates mit einer weiteren, geeignet difunktionalisierten Verbindung erfolgen.

So kann z.B. 2',7'-Dibrom-4,5-diaza-9,9'-spirobifluoren mit Biphenyl-4,4'-bisboronsäure polymerisiert werden. Auf diese Weise ist gleichzeitig mit dem Polymerisationsschritt der Aufbau verschiedener heterocyclischer Einheiten möglich, z.B. die Bildung von Oxadiazoleinheiten aus difunktionellen Carbonsäurehalogeniden und difunktionellen Carbonsäurehydraziden oder aus der entsprechenden Dicarbonsäure und Hydrazinsulfat (B. Schulz, E. Leibnitz, Acta Polymer. 1992, 43, Seite 343; JP-A 05/178, 990, oder alternativ aus Dicarbonsäurehalogeniden und Bistetrazolen (C. A. Abshire, C. S. Marvel, Makromol. Chem. 1961, 44 bis 46, Seite 388).

Zur Herstellung von Copolymeren können beispielsweise unterschiedliche Monomere mit Strukturelementen der Formel (I) gemeinsam polymerisiert werden.

Die Aufarbeitung erfolgt nach bekannten, dem Fachmann geläufigen Methoden, wie sie beispielsweise bei R. J. Young, P. A. Lovell, Introduction to Polymers, Chapman & Hall, London, 1991, beschrieben sind. Beispielsweise kann man die Reaktionsmischung filtrieren, mit wäßriger Säure verdünnen, extrahieren und das nach Trocknen und Abziehen des Lösungsmittels erhaltene Rohprodukt durch Umfällen weiter reinigen.

Endständige Bromatome können beispielsweise mit LiAlH₄ reduktiv entfernt werden (siehe z.B. J. March, Advanced Organic Chemistry, 3. Aufl. McGraw-Hill, S. 510).

Die erfindungsgemäßen Verbindungen können als Elektrolumineszenzmaterialien Verwendung finden.

Gegenstand der Erfindung ist daher auch die Verwendung von Verbindungen enthaltend Struktureinheiten der Formel (I), als Elektrolumineszenzmaterial.

Als Elektrolumineszenzmaterial im Sinne der Erfindung gelten Stoffe, die als aktive Schicht in einer Elektrolumineszenzvorrichtung Verwendung finden können. Aktive Schicht bedeutet, daß die Schicht befähigt ist, bei Anlegen eines elektrischen Feldes Licht abzustrahlen (lichtemittierende Schicht) und/oder daß sie die Injektion und/oder den Transport der positiven und/oder negativen Ladungen verbessert (Ladungsinjektions- oder Ladungstransportschicht). Hervorzuheben sind die hervorragenden Lochleitereigenschaften der erfindungsgemäßen Materialien, die z.B. als Lochtransportschicht Anwendung in Photokopierern und Laserdruckern finden können.

Gegenstand der Erfindung ist daher auch ein Elektrolumineszenzmaterial, enthaltend ein oder mehrere Verbindungen, enthaltend Struktureinheiten der Formel (I).

Üblicherweise enthält das erfindungsgemäße Elektrolumineszenzmaterial ein oder mehrere erfindungsgemäße Verbindungen als Hauptkomponente, d.h. zu größer als 50 Gew.-%, oder als Additiv.

Um als Elektrolumineszenzmaterialien Verwendung zu finden, werden Lösungen von Verbindungen enthaltend Struktureinheiten der Formel (I), im allgemeinen nach bekannten, dem Fachmann geläufigen Methoden, wie Gießen (Casting), Eintauchen (Dipping), Aufschleudern (Spincoating) oder Vorhangbeschichtung in Form eines Films auf ein Substrat aufgebracht.

Weiterhin Gegenstand der Erfindung ist daher auch ein Verfahren zur Herstellung eines Elektrolumineszenzmaterials, dadurch gekennzeichnet, daß man ein oder mehrere Verbindungen, enthaltend Struktureinheiten der Formel (I), in Form eines Films auf ein Substrat aufbringt.

Gegenstand der Erfindung ist zudem eine Elektrolumineszenzvorrichtung mit einer oder mehreren aktiven Schichten, wobei mindestens eine dieser aktiven Schichten ein oder mehrere erfindungsgemäße Verbindungen enthaltend Strukturelemente der Formel (I), enthält. Die aktive Schicht kann beispielsweise eine lichtemittierende Schicht und/oder eine Transportschicht und/oder eine Ladungsinjektionsschicht sein.

Der allgemeine Aufbau solcher Elektrolumineszenzvorrichtungen ist beispielsweise in US-A-4,539,507 und US-A-5,151,629 beschrieben. Polymere enthaltende Elektrolumineszenzvorrichtungen sind beispielsweise in WO 90/13148 oder EP-A 0 443861 beschrieben.

Sie enthalten üblicherweise eine elektrolumineszierende Schicht zwischen einer Kathode und einer Anode, wobei mindestens eine der Elektroden transparent ist. Zusätzlich kann zwischen der elektrolumineszierenden Schicht und der Kathode eine Elektroneninjektions- und/oder Elektronentransportschicht eingebracht sein und/oder zwischen der elektrolumineszierenden Schicht und der Anode eine Lochinjektions- und/oder Lochtransportschicht eingebracht sein. Als Kathode können Metalle und/oder Metallegierungen, vorzugsweise mit niedriger Austrittsarbeit, z.B. Ca, Mg, Al, In, Mg/Ag dienen. Als Anode können neben Metallen wie Au auch leitfähige Metalloxide wie ITO (Indiumoxid/Zinnoxid) auf einem transparenten Substrat, z.B. aus Glas oder einem transparenten Polymer, dienen.
Im Betrieb wird die Kathode auf negatives Potential gegenüber der Anode gesetzt. Dabei werden Elektronen von der Kathode in die
Elektroneninjektionsschicht-/Elektronentransportschicht bzw. direkt in die lichtemittierende Schicht injiziert. Gleichzeitig werden Löcher von der Anode in die Lochinjektionsschicht/ Lochtransportschicht bzw. direkt in die lichtemittierende Schicht injiziert.

Die injizierten Ladungsträger bewegen sich unter dem Einfluß der angelegten Spannung durch die aktiven Schichten aufeinander zu. Dies führt an der Grenzfläche zwischen Ladungstransportschicht und lichtemittierender Schicht bzw. innerhalb der lichtemittierenden Schicht zu Elektronen/Loch-Paaren, die unter Aussendung von Licht rekombinieren.
Die Farbe des emittierten Lichtes kann durch die als lichtemittierende Schicht verwendete Verbindung variiert werden, wobei ausdrücklich neben Copolymeren auch Abmischungen der erfindungsgemäßen Polymere mit anderen elektrooptisch-aktiven oder -passiven Stoffen miteingeschlossen sein sollen.

Elektrolumineszenzvorrichtungen finden Anwendung z.B. als selbstleuchtende Anzeigeelemente, wie Kontrollampen, alphanumerische Displays, Hinweisschilder, und in optoelektronischen Kopplern. Die erfindungsgemäßen Materialien sind aufgrund ihrer guten Lochtransporteigenschaften auch als Fotoleiterelemente, z.B. in Fotokopierern und Laserdruckern geeignet.

Die Erfindung wird durch die Beispiele näher erläutert, ohne sie dadurch beschränken zu wollen.

### Beispiele

### Beispiel 1: 4,5-Diaza-9,9'-spirobifluoren

Zu einer siedenden Lösung von 0.1 mol Grignardreagenz aus 2-Brombiphenyl und Magnesium in trockenem Diethylether (100 ml) wird innerhalb von 10 Minuten 0.1 mol 4,5-Diazafluorenon (käuflich bei Maybridge Chemical Co. Ltd.) gelöst in 300 ml ebenfalls trockenem Diethylether zugetropft. Man refluxiert für weitere 3 Stunden. Nach Abkühlen wird der ausgefallenen gelbe Mg-Komplex abgesaugt, mit wenig Diethylether nachgewaschen und schließlich mit neutral gepuffertem Eiswasser hydrolysiert. Das so gebildete 9-(2-Biphenyl)-4,5-diazafluoren-9-ol wird nach längerem Rühren abgesaugt und getrocknet. Die gewünschte Spiroverbindung wird daraus durch ca. 3 h Refluxieren in 100 ml Eisessig/5 ml HCI (37%) erhalten. Das Produkt kristallisiert aus der Reaktionslösung in Form des Dihydrochlorids aus. Die neutrale Form wird durch Rühren dieses Salzes mit NaHCO₃-Lösung erhalten. Nach Umkristallisation aus Ethanol erhält man ca. 55-70% farbloses Produkt bezogen auf 4,5-Diazafluorenon.
¹H NMR (CDCl₃) [δ, Multiplizität, Integral, Zuordnung] 6.73 (dd, 2 H, H-1'/8'), 7.10 (dt, 2 H, H-2'/7'), 7.25 (m, 4 H, H-3'/6', H-2/7), 7.37 (dd, 2 H, H-1/8), 7.72 (dd, 2 H, H-4'/5'), 8.63 (dd, 2 H, H-3/6).

### Beispiel 2: Spiro-9-fluoren-9'-xanthen

Zu einer siedenden Lösung des Grignardreagenz aus 8.9 g 2-Ioddiphenylether und 0.73 g Magnesium in trockenem Diethylether (250 ml) wird innerhalb von 10 Minuten 4.5 g Fluorenon gelöst in 100 ml ebenfalls trockenem Diethylether zugetropft. Man refluxiert für weitere 10 Stunden. Nach Abkühlen wird der ausgefallenen gelbe Mg-Komplex abgesaugt, mit wenig Diethylether nachgewaschen und schließlich mit Eiswasser/NH₄Cl hydrolysiert. Das so gebildete Fluorenolderivat wird nach längerem Rühren abgesaugt und getrocknet. Die gewünschte Spiroverbindung wird daraus durch ca. 3 h Refluxieren in 100 ml Eisessig/5 ml HCI (37%) erhalten. Das Produkt kristallisiert aus der Reaktionslösung in Form farbloser Nadeln. Nach Umkristallisation aus Ethanol erhält man ca. 50-60% farbloses Produkt bezogen auf Fluorenon.
¹H NMR (CDCl₃) [δ, Multiplizität, Integral, Zuordnung] 6.55 (dd, 2 H, H-1'/8'), 6.68 (dd, 2 H, H-1/8), 7.12 (m, 4 H, H-2/7, H-2'/7'), 7.25 (m, 4 H, H-3/6, H-3'/6'), 7.45 (dd, 2 H, H-4'/5'), 7.77 (dd, 2 H, H-4/5).

### Beispiel 3: Spiro-5-dibenzocycloheptan-9'-fluoren

Zu einer siedenden Lösung von 75 mmol Grignardreagenz aus 2-Brombiphenyl und Magnesium in trockenem Diethylether (100 ml) wird innerhalb von 10 Minuten 55 mmol Dibenzosuberon gelöst in 100 ml ebenfalls trockenem Diethylether zugetropft. Man refluxiert für weitere 24 Stunden. Nach Abkühlen wird die gelbe Suspension mit NH₄Cl/Eiswasser hydrolysiert. Die Phasen werden getrennt, die wässrige Phase wird noch mehrfach mit Diethylether ausgeschüttelt. Die vereinigten organische Phasen werden eingeengt und der entstehende Feststoff kann direkt für die weitere Umsetzung verwendet werden. Die gewünschte Spiroverbindung wird daraus durch ca. 3 h Refluxieren in 100 ml Trifluoressigsäure erhalten. Das Produkt kristallisiert aus der Reaktionslösung in Form farbloser Nadel aus. Nach Umkristallisation aus Petrolether (80/110) erhält man ca. 50-70% farbloses Produkt bezogen auf Dibenzosuberon.
¹H NMR (CDCl₃) [δ, Multiplizität, Integral, Zuordnung] 3.35 (s, 4H, -CH₂-CH₂-), 6.38 (dd, 2 H, H-4/6), 6.68 (dd, 2 H, H-1'/8'), 6.74 (dt, 2 H, H-3/7), 6.97 (dt, 2 H, H-2',7'), 7.15 (m, 4 H, H-2/8, H-3'/6'), 7.31 (dd, 2 H, H-1/9), 7.79 (dd, 2 H, H-4'/5').

### Beispiel 4: 2',7'-Dibrom-4,5-diaza-9,9'-spirobifluoren

Zu einer refluxierenden Lösung von 10 g 4,5-Diaza-9,9'-spirobifluoren (gemäß Beispiel 1) in 50 ml Chloroform die mit 100 mg FeCl₃ versetzt wurde, werden innerhalb von 5 Minuten 10 ml Brom (verdünnt mit 10 ml Chloroform) zugegeben. Die entstehende Reaktionsmischung wird für weitere 2 Stunden refluxiert. Danach wird der Bromüberschuß schnell durch Einrühren von ca. 100 ml Na₂SO₃ vernichtet. Die so entstehenden Phasen werden separiert, die organische Phase wird noch mit NaHCO₃-Lösung und Wasser ausgeschüttelt und anschließend auf ca. 30 ml Gesamtvolumen eingeengt. Nach Stehenlassen über Nacht bei -18°C kann das gewünschte Produkt als farbloses Pulver abgesaugt werden. Eine weitere Reinigung ist in der Regel nicht notwendig: ca. 75% Ausbeute bezogen auf 4,5-Diaza-9,9'-spirobifluoren.
¹H NMR (CDCl₃) [δ, Multiplizität, Integral, Zuordnung] 6.85 (d, 2 H, H-1'/8'), 7.28 (t, 2 H, , H-2/7), 7.34 (dd, 2 H, H-1/8), 7.67 (dd, 2 H, H-3'/6'), 7.85 (d, 2 H, H-4'/5'), 8.60 (dd, 2 H, H-3/6).

### Beispiel 5: Spiro-2,7-dibrom-9-fluoren-9'-xanthen

Zu einer Lösung von 10 g Spiro-9-fluoren-9'-xanthen (gemäß Beispiel 2) in 50 ml Chloroform die mit 100 mg FeCl₃ versetzt wurde, werden innerhalb von 15 Minuten 9.6 g Brom (verdünnt mit 10 ml Chloroform) zugegeben. Die entstehende Reaktionsmischung wird für weitere 2 Stunden bei Raumtemperatur gerührt. Danach wird die organische Phase zunächst mit NaSO₃-Lösung, anschließend mit NaHCO₃-Lösung und Wasser ausgeschüttelt. Die organische Phase wird schließlich auf ein Gesamtvolumen von 40 ml eingeengt. Nach Stehenlassen über Nacht bei -18°C kann das gewünschte Produkt als farbloses Pulver abgesaugt werden. Eine weitere Reinigung ist in der Regel nicht notwendig: ca. 45% Ausbeute.
¹H NMR (CDCl₃) [δ, Multiplizität, Integral, Zuordnung] 6.58 (dd, 2 H, H-1'/8'), 6.85 (d, 2 H, H-1/8), 7.08 (dt, 2 H, H-2'/7'), 7.20 (dt, 2 H, H-3'/6'), 7.43 (dd, 2 H, H-4'/5'), 7.55 (dd, 2 H, H-3/6), 7.67 (d, 2 H, H-4/5).

### Beispiel 6: Spiro-2',7'-dibrom-5-dibenzocycloheptan-9'-fluoren

Zu einer abgedunkelten Lösung von 10.3 g Spiro-5-dibenzocycloheptan-9'-fluoren (gemäß Beispiel 3) in 50 ml Chloroform die mit 100 mg FeCl₃ versetzt wurde, werden innerhalb von 15 Minuten 9.6 g Brom (verdünnt mit 10 ml Chloroform) zugegeben. Die entstehende Reaktionsmischung wird für weitere 4 Stunden bei Raumtemperatur gerührt. Danach wird die organische Phase zunächst mit NaSO₃-Lösung, anschließend mit NaHCO₃-Lösung und Wasser ausgeschüttelt. Die organische Phase wird zur Trockene einrotiert. Das erhaltene gelbliche Rohprodukt wird durch Säulenchromatographie (SiO₂, Dichlormethan) vorgereinigt und schließlich aus Chloroform/Hexan umkristallisiert: ca. 50% Ausbeute.
¹H NMR (CDCl₃) [δ, Multiplizität, Integral, Zuordnung] 3.32 (s, 4H, -CH₂-CH₂-), 6.38 (dd, 2 H, H-4/6), 6.74 (dt, 2 H, H-3/7), 6.82 (d, 2 H, H-1'/8'), 7.18 (dt, 2 H, H-2/8), 7.33 (dd, 2 H, H-1/9), 7.58 (dd, 2 H, H-3',6'), 7.69 (d, 2 H, H-4'/5').

### Beispiel 7: Polymerisation von 2',7'-Dibrom-4,5-diaza-9,9'-spirobifluoren (Polymer 1)

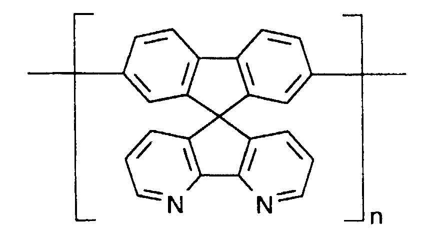

1 mmol NiCl₂(PPh₃)₂, 20 mmol PPh₃, 2 mmol 2,2'-Bipyridyl, 40 mmol Zn-Staub werden unter Argon getrocknet. Zu diesem Feststoffgemisch werden 5 g 2',7'-Dibrom-4,5-diaza-9,9'-spirobifluoren gelöst in 40 ml über Na/Benzophenon getrocknetem Tetrahydrofuran gegeben. Die Reaktionsmischung wird unter kräftigen Rühren für ca. 3 Tage refluxiert. Man filtriert den erkalteten Reaktionsansatz und engt diesen anschließend zur Trockene ein. Der Reaktionsansatz wird erneut in Chloroform gelöst, zunächst mehrfach in 2 N HCI geschüttelt um Zn-Reste zu beseitigen. Die organische Phase wird anschließend mit NaHCO₃-Lösung und H₂O neutral gewaschen. Die kombinierten HCI-Waschlösungen werden mit NaHCO₃-Lösung vorsichtig neutralisiert und mit Chloroform rückgeschüttelt. Die vereinigten Chloroformlösungen werden auf ca. 30 ml eingeengt und das Polymer durch Eingiesen in das 10 fache Volumen Methanol ausgefällt. Zur weiteren Reinigung und zur Abtrennung niedermolekularer Bestandteile wird insgesamt noch dreimal in Chloroform aufgenommen und in Methanol gefällt.
Man erhält schließlich ca. 2.5 g hellgelbes Polymer (ca. 75%).
M_{w} (GPC, PS-Standard, THF): 15000 (P_{D} = 2.3).

### Beispiel 8: Polymerisation von Spiro-2,7-dibrom-9-fluoren-9'-xanthen (Polymer 2)

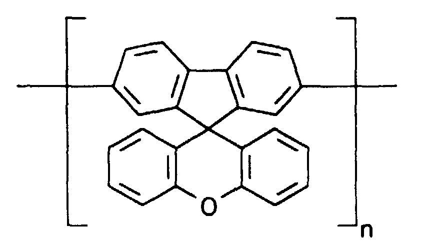

Die Polymerisation von Spiro-2,7-dibrom-9-fluoren-9'-xanthen verläuft analog zu den Angaben in Beispiel 7. Die Aufarbeitung verläuft ebenfalls analog; hier ist jedoch eine Neutralisation der HCI-Phase und ein Rückschütteln nicht notwendig.
Man erhält schließlich ein hellgelbes Polymer (ca. 55%).
M_{w} (GPC, PS-Standard, THF mit 1% Ameisensäure): 22000 (P_{D} = 2.9).

### Beispiel 9: Polymerisation von Spiro-2',7'-dibrom-5-dibenzocycloheptan-9'-fluoren (Polymer 3)

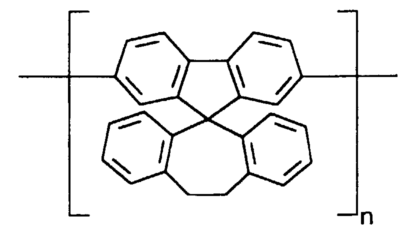

Die Polymerisation von Spiro-2',7'-dibrom-5-dibenzocycloheptan-9'-fluoren verläuft analog zu den Angaben in Beispiel 7. Die Aufarbeitung verläuft ebenfalls analog; hier ist jedoch ebenfalls eine Neutralisation der HCI-Phase und ein Rückschütteln nicht notwendig.
Man erhält schließlich ein hellgelbes Polymer (ca. 60%).
M_{w} (GPC, PS-Standard, THF mit 1% Ameisensäure): 10000 (P_{D} = 2.1).

### Beispiel 10: Polymerisation von Spiro-2',7'-dibrom-5-dibenzocycloheptan-9'-fluoren mit Biphenyl-4,4'-diboronsäure (Polymer 4)

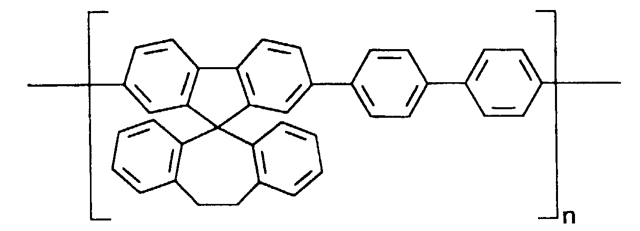

In eine Mischung aus 25 ml THF und 10 ml Ethanol wurden 2 mmol Spiro-2',7'-dibrom-5-dibenzocycloheptan-9'-fluoren und 2.2 mmol Biphenyl-4,4'-ylendiboronsäure gegeben. Dazu wurden 20 ml 1 molare wäßrige Kaliumcarbonatlösung gegeben. Die Mischung wurde unter Stickstoff am Rückfluß gekocht und 50 mg Tetrakis(triphenylphosphino)palladium, gelöst in 5 ml THF wurden zugegeben. Nach 48 Stunden Refluxieren wurde auf Raumtemperaur abgekühlt. Das gebildete gelbe Polymer wurde abgesaugt, mit verdünnter Salzsäure 2 Stunden gekocht und nach erneutem Absaugen mit Wasser säurefrei gewaschen. Das Polymer wird (analog der Beschreibung in Beispiel 7) mehrfach aus Chloroform in Methanol eingefällt.
Man erhält schließlich ein gelbes Polymer (ca. 40%).
M_{w} (GPC, PS-Standard, THF mit 1% Ameisensäure): 7000 (P_{D} = 2.7).

### Beispiel 11: Photolumineszenzmessung an den Polymeren 1 bis 4

Die Photolumineszenzspektren dieser Polymere wurden sowohl in verdünnter Lösung (<1 mg/100 ml CHCl₃) als auch als Filme (Dicke jeweils ca. 80 bis 100 nm) aufgenommen. Die Polymere weisen dabei ausnahmslos blaue Emission auf. Die Emissionsmaxima sind in der folgende Tabelle zusammengefaßt.

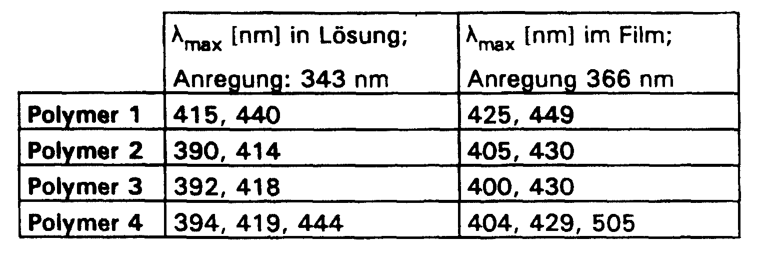

### Beispiel 12: Elektrolumineszenz-Vorrichtung

Eine Lösung des zu vermessenden Polymers in Chloroform (Konzentration: 15 mg/ml) wird unter Stickstoff durch Spin-Coating bei 1000 upm auf einen mit ITO (Indium-Zinn-Oxid) beschichteten Glasträger (strukturiert, Streifen 2 mm breit) aufgebracht. Der Glasträger wurde über eine Schleuse unter Beibehaltung der Schutzgasatmosphäre in eine Hochvakuum-Bedampfungsanlage überführt. Bei 2x10⁻⁵ mbar wurden quer zu den ITO-Streifen unter Verwendung einer Maske Ca-Streifen (2 mm breit, 230 nm dick) auf die Polymerschicht aufgedampft. Die so erhaltene Vorrichtung, ITO/Polymer/Ca, wurde in einen Probenhalter gegeben und die Elektroden über Federkontakte mit einer Stromquelle verbunden, wobei ein ITO-Streifen positiv und ein Ca-Streifen negativ gepolt wurden. Beim Anlegen einer Spannung von mehr als 7 V wurde an dem entsprechenden Matrixelement eine blaue Elektrolumineszenz beobachtet, deren spektrale Form nahezu identisch mit den oben angegebenen Filmphotolumineszenzen sind. Für die Polymere 1 bis 4 wurde bei einer genügend hohen Spannung jeweils eine Leuchtdichte von mehr als 500 Cd/m² erhalten.

## Patentansprüche

1. Konjugierte Verbindung, enthaltend Struktureinheiten der Formel (I), 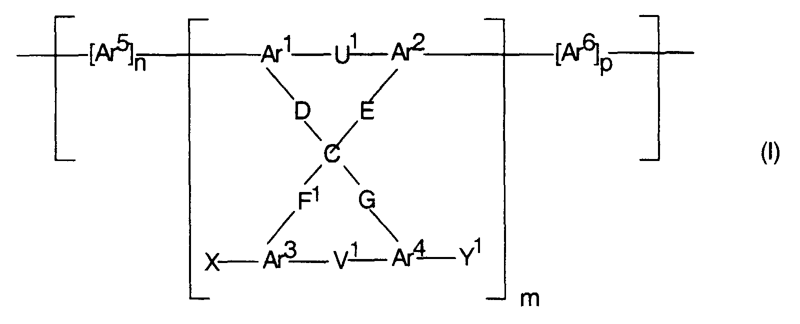 wobei die Symbole und Indizes folgende Bedeutungen haben:
D, E, F¹, G sind gleich oder verschieden -CR¹R¹-, -O-, -S-, -NR³- oder eine chemische Bindung;
Ar¹, Ar² sind gleich oder verschieden Benzol-triyl, Thiophen-triyl, Furan-triyl, Pyrrol-triyl, Pyridin-triyl, Pyrimidin-triyl, Pyrazin-triyl oder Pyridazin-triyl, wobei jede dieser Gruppen unabhängig voneinander mit 1 bis 3 gleichen oder verscniedenen Resten R⁴ substituiert sein kann;
Ar³, Ar⁴ haben gleich oder verschieden die bei Ar¹, Ar² angegebenen Bedeutungen oder sind Cyclohexan-triyl, Cyclopentan-triyl, Cyclohexen-triyl oder Cyclopenten-Triyl, wobei jede dieser Gruppen unabhängig voneinander mit 1 bis 3 gleichen oder verschiedenen Resten R⁴ substituiert sein kann;
U¹, V¹ sind gleich oder verschieden -CR⁵=CR⁶-, -CR⁷R⁸-, -CR⁹R¹⁰-CR¹¹R¹²-, -NR¹³-, -SiR¹⁴R¹⁵-, -O-, -S-, -SO- -SO₂-, -CO- oder eine chemische Bindung;
Ar⁵, Ar⁶, X, Y¹ sind gleich oder verschieden cyclische oder acyclische, konjugierte Kohlenwasserstoffe mit 2 bis 100 Kohlenstoffatomen, die auch Heteroatome enthalten können und die durch einen oder mehrere Reste R⁴ substituiert sein können, X und/oder Y¹ können auch gleich oder verschieden H oder R¹ sein;
R¹,R²,R⁵,R⁶,R⁷,R⁸,R⁹,R¹⁰,R¹¹,R¹² sind gleich oder verschieden H, eine geradkettige oder verzweigte Alkylgruppe mit 1 bis 22 C-Atomen, wobei eine oder mehrere vorzugsweise eine, -CH₂-Gruppen durch -O-, -CO-O-, -O-CO- oder ersetzt sein können und wobei ein oder mehrere Wasserstoffatome durch F ersetzt sein können, eine Aryl- oder Aryloxygruppe die auch Heteroatome enthalten können und die mit einem oder mehreren Resten R⁶ substituiert sein kann; Br, Cl, F, CN, NO₂, CF₃, wobei R¹ und R², R⁷ und R⁸, R⁹ und R¹⁰ sowie R¹¹ und R¹² jeweils zusammen ein Ringsystem bilden können;
R³, R¹⁴, R¹⁵ sind gleich oder verschieden H oder eine geradkettige oder verzweigte Alkylgruppe mit 1 bis 22 C-Atomen, wobei auch eine oder mehrere, nicht direkt an N gebundene, CH₂-Gruppen durch -O-, -CO-O-, -O-CO- ersetzt sein können; eine Arylgruppe mit vorzugsweise 2 bis 20 C-Atomen, die auch Heteroatome enthalten können und die mit einem oder mehreren, gleichen oder verschiedenen Resten R⁴ substituiert sein können;
R⁴ ist gleich oder verschieden F, Cl, Br, CN, NO₂, CF₃ oder eine geradkettige oder verzweigte Alkylgruppe mit 1 bis 22 C-Atomen, bei der auch eine oder mehrere, nicht direkt aneinander gebundene CH₂-Gruppen durch -O-, -CO-C-, -O-CO- ersetzt sein können und wobei auch ein oder mehrere H-Atome durch F ersetzt sein können;
m ist 1, 2, 3 oder 4;
n, p sind gleich oder verschieden 0, 1, 2, 3 oder 4;
wobei folgende Verbindungen ausgenommen sind:
a) Verbindungen, bei denen Ar¹, Ar², Ar³ und Ar⁴ Benzol-triyl sind; D, E, F¹, G, U¹ und V¹ Einfachbindungen sind und X und Y¹ cyclische oder acyclische, konjugierte Kohlenwasserstoffe sind, die auch Heteroatome enthalten können und die auch substituiert sein können, und
b) Poly[2,7-(9,9'-spirobifluorenylen)-4,4'-biphenylen] 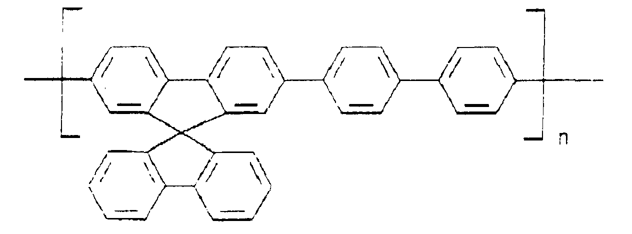 und
Poly-2,7-(9,9'-spirobifluoren)ylen

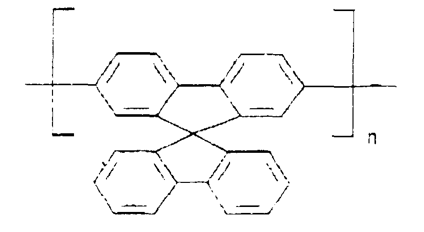

2. Konjugierte Verbindung gemäß Anspruch 1, dadurch gekennzeichnet, daß es 2 bis 1000 Struktureinheiten der Formel (I) aufweist.

3. Konjugierte Verbindung gemäß Anspruch 1 und/oder 2, dadurch gekennzeichnet, daß es verschiedene Struktureinheiten der Formel (I) aufweist.

4. Konjugierte Verbindung nach einem oder mehreren der vorhergehenden Ansprüche, dadurch gekennzeichnet, daß die Symbole und Indizes in der Formel (I) folgende Bedeutungen haben:
Ar⁵, Ar⁶ sind gleich oder verschieden jeweils eine bis 5 gleiche oder verschiedene Arylen- und/oder Heteroarylen- und/oder Vinylengruppen, die gegebenenfalls substituiert sein können;
m ist 1 und
n, p sind gleich oder verschieden 0 oder 1
wobei die obengenannten Verbindungen ausgenommen sind.

5. Konjugierte Verbindung nach einem oder mehreren der vorhergehenden Ansprüche, dadurch gekennzeichnet, daß die Symbole und Indizes in der Formel (I) folgende Bedeutungen haben:
Ar¹, Ar², Ar³, Ar⁴ sind gleich oder verschieden Benzol-triyl, Pyridin-triyl, Thiophen-triyl, Pyrazin-triyl oder Pyrimidin-triyl;
Ar⁵, Ar⁶ sind gleich oder verschieden 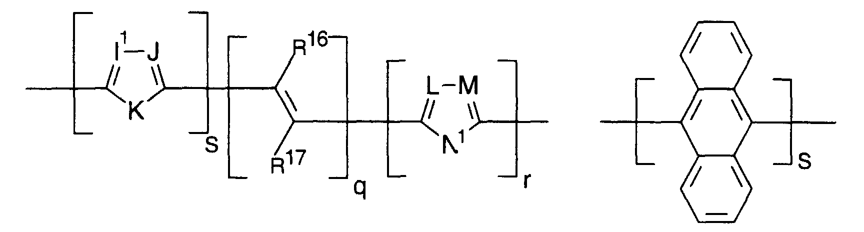 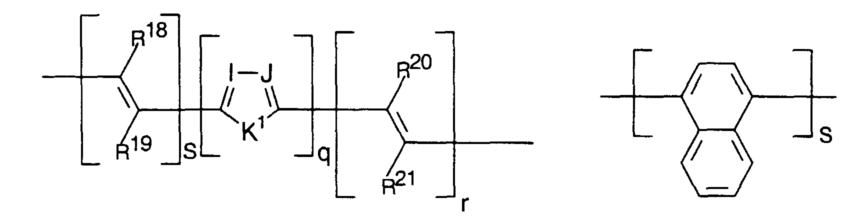 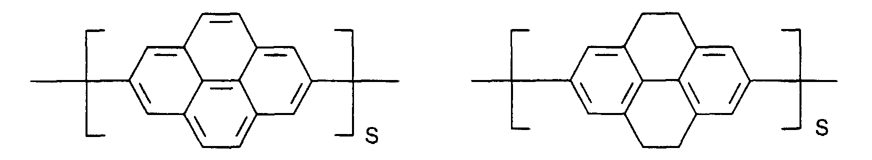 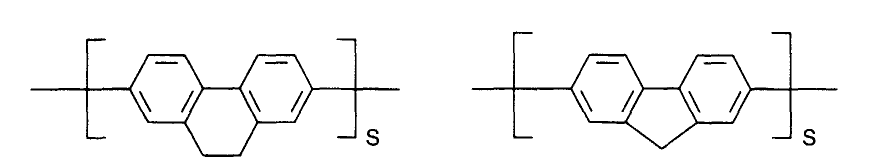
X, Y¹ sind gleich oder verschieden H, eine geradkettige oder verzweigte Alkylgruppe mit 1 bis 22 C-Atomen, wobei eine oder mehrere -CH₂-Gruppen durch -O-, -CO-O-, -O-CO- ersetzt sein können und wobei ein oder mehrere Wasserstoffatome durch F ersetzt sein können; Br, Cl, F, CN, NO₂, CF₃ oder 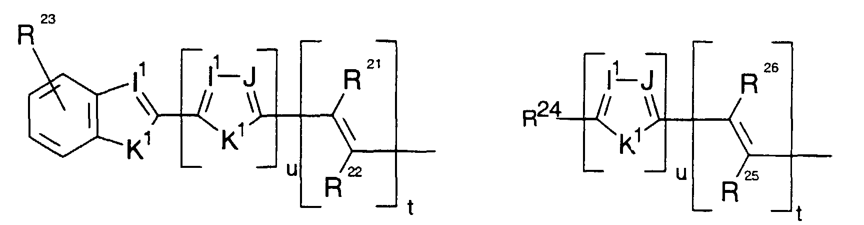 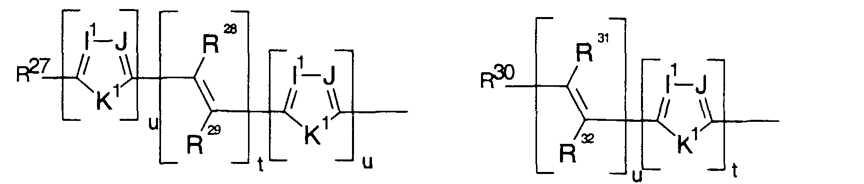 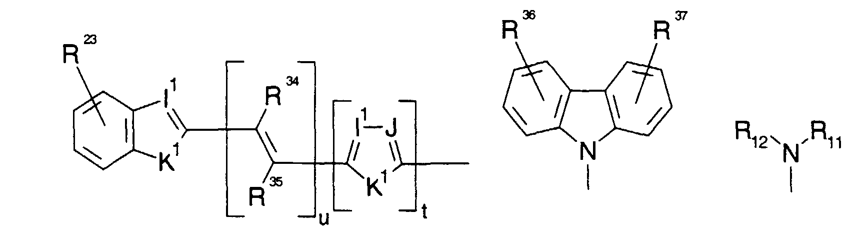
I¹, J, L, M sind gleich oder verschieden =CR³⁸-, =N-;
K¹, N¹ sind gleich oder verschieden -O-, -S-, CR³⁹R⁴⁰, -CR⁴¹ = CR⁴²-, -NR⁴³-, -CR⁴⁴ = N-;
R¹⁶-R⁴² sind gleich oder verschieden und haben, gleich oder verschieden von R¹ die gleichen Bedeutungen wie R¹ in der Formel (I);
R⁴³, R⁴⁴ sind gleich oder verschieden und haben gleich oder verschieden von R³ die gleichen Bedeutungen wie R³ in der Formel (I);
q, r, s, t, u sind gleich oder verschieden 0, 1, 2, 3, 4 oder 5, wobei die oben angegebenen Verbindungen ausgenommen sind.

6. Verwendung einer Verbindung nach einem oder mehreren der Ansprüche 1 bis 5 als Elektrolumineszenzmaterial.

7. Elektrolumineszenzmaterial, enthaltend eine oder mehrere Verbindungen nach einem oder mehreren der Ansprüche 1 bis 5.

8. Elektrolumineszenzmaterial nach Anspruch 7, dadurch gekennzeichnet, daß es ein lichtemittierendes Material, ein Ladungstransportmaterial oder ein Ladungsinjektionsmaterial ist.

9. Verfahren zur Herstellung eines Elektrolumineszenzmaterials, dadurch gekennzeichnet, daß man eine oder mehrere Verbindungen nach einem oder mehreren der Ansprüche 1 bis 5 in Form eines Films auf ein Substrat aufbringt.

10. Elektrolumineszenzvorrichtung mit einer oder mehreren aktiven Schichten, wobei mindestens eine dieser Schichten eine oder mehrere Verbindungen nach einem oder mehreren der Anprüche 1 bis 5 enthält.

## Claims

1. A conjugated compound comprising structural units of the formula (I), 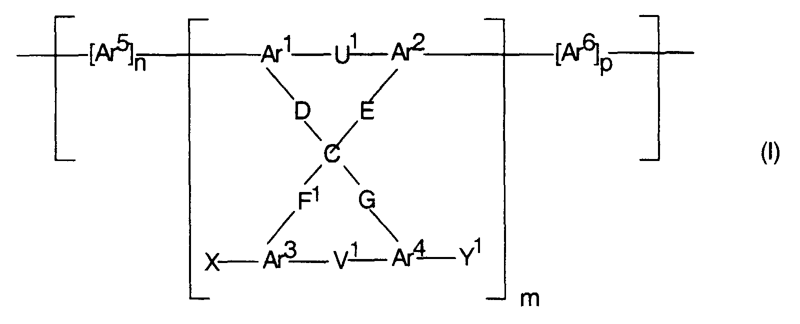 where the symbols and indices have the following meanings:
D, E, F¹, G are identical or different and are -CR¹R¹-, -O-, -S-, -NR³- or a chemical bond;
Ar¹, Ar² are identical or different and are benzenetriyl, thiophenetriyl, furantriyl, pyrroletriyl, pyridinetriyl, pyrimidinetriyl, pyrazinetriyl or pyridazinetriyl, where each of these groups can, independently of one another, be substituted by from 1 to 3 identical or different radicals R⁴;
Ar³, Ar⁴ are identical or different and as defined for Ar¹, Ar² or are cyclohexanetriyl, cyclopentanetriyl, cyclohexenetriyl or cyclopentenetriyl, where each of these groups can, independently of one another, be substituted by from 1 to 3 identical or different radicals R⁴;
U¹, V¹ are identical or different and are -CR⁵=CR⁶-, -CR⁷R⁸-, -CR⁹R¹⁰-CR¹¹R¹²-, -NR¹³-, -SiR¹⁴R¹⁵-, -O-, -S-, -SO-, -SO₂- , -CO- or a chemical bond;
Ar⁵, Ar⁶, X, Y¹ are identical or different cyclic or acyclic, conjugated hydrocarbons having from 2 to 100 carbon atoms which can also contain heteroatoms and which can be substituted by one or more radicals R⁴, X and/or Y¹ can also be, identical or different, H or R¹;
R¹,R²,R⁵,R⁶,R⁷,R⁸,R⁹,R¹⁰,R¹¹,R¹² are identical or different and are H, a straight-chain or branched alkyl group having from 1 to 22 carbon atoms, where one or more, preferably one, -CH₂- groups can be replaced by -O-, -CO-O- or -O-CO- and one or more hydrogen atoms can be replaced by F; an aryl or aryloxy group which can also contain heteroatoms and be substituted by one or more radicals R⁶; Br, Cl, F, CN, NO₂, CF₃, where R¹ and R², R⁷ and R⁸, R⁹ and R¹⁰ as well as R¹¹ and R¹² can in each case together form a ring system;
R³, R¹⁴, R¹⁵ are identical or different and are H or, a straight-chain or branched alkyl group having from 1 to 22 carbon atoms, where one or more CH₂ groups not directly bonded to N can also be replaced by -O-, -CO-O- or -O-CO-; an aryl group preferably having from 2 to 20 carbon atoms which can also contain heteroatoms and which can be substituted by one or more, identical or different radicals R⁴;
R⁴ are identical or different and are F, Cl, Br, CN, NO₂, CF₃ or a straight-chain or branched alkyl group having from 1 to 22 carbon atoms, in which one or more CH₂ groups not bonded directly to one another can also be replaced by -O-, -CO-O- or -O-CO- and one or more H atoms can also be replaced by F;
m is 1, 2, 3 or 4;
n, p are identical or different and are 0, 1, 2, 3 or 4;
with the following compounds being excepted:
a) compounds in which Ar¹, Ar², Ar³ and Ar⁴ are benzenetriyl; D, E, F¹, G, U¹ and V¹ are single bonds and X and Y¹ are cyclic or acyclic, conjugated hydrocarbons which can also contain heteroatoms and can also be substituted, and
b) poly[2,7-(9,9'-spirobifluorenylene)-4,4'-biphenylene] 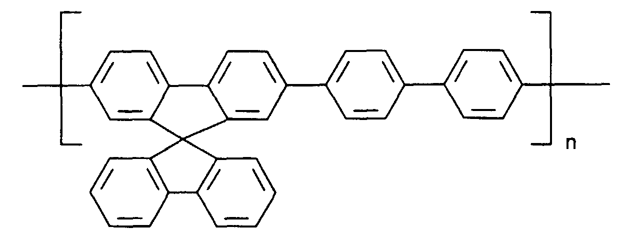 and
poly-2,7-(9,9'-spirobifluorene)ylene

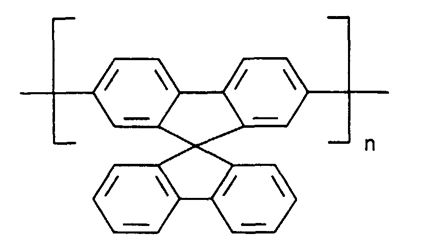

2. A conjugated compound as claimed in claim 1, comprising from 2 to 1000 structural units of the formula (I).

3. A conjugated compound as claimed in claim 1 and/or 2, comprising various structural units of the formula (I).

4. A conjugated compound as claimed in one or more of the preceding claims, wherein the symbols and indices in the formula (I) have the following meanings:
Ar⁵, Ar⁶ are identical or different and are each from one to 5 identical or different arylene and/or heteroarylene and/or vinylene groups which may be substituted or unsubstituted;
m is 1 and
n, p are identical or different and are 0 or 1,
with the abovementioned compounds being excepted.

5. A conjugated compound as claimed in one or more of the preceding claims, wherein the symbols and indices in the formula (I) have the following meanings:
Ar¹, Ar², Ar³, Ar⁴ are identical or different and are benzenetriyl, pyridinetriyl, thiophenetriyl, pyrazinetriyl or pyrimidinetriyl;
Ar⁵, Ar⁶ are identical or different and are 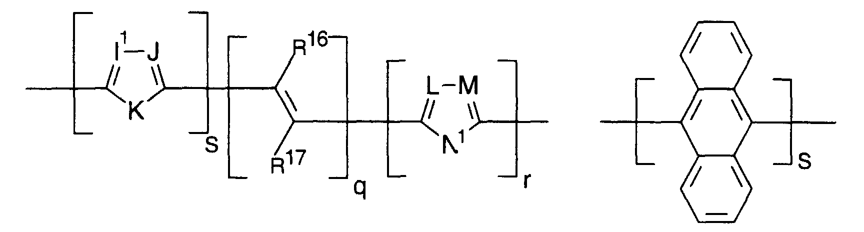 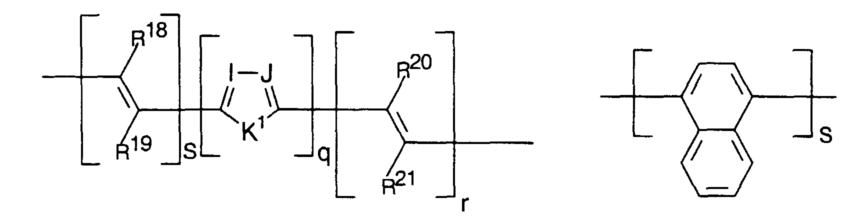 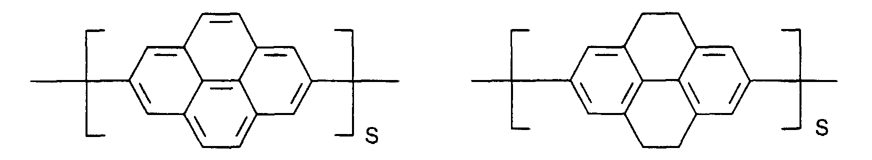 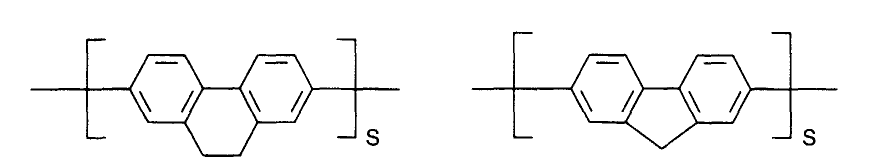
X, Y¹ are identical or different and are H, a straight-chain or branched alkyl group having from 1 to 22 carbon atoms, where one or more -CH₂- groups can be replaced by -O-, -CO-O-, -O-CO- and one or more hydrogen atoms can be replaced by F; Br,Cl, F, CN, NO₂, CF₃ or 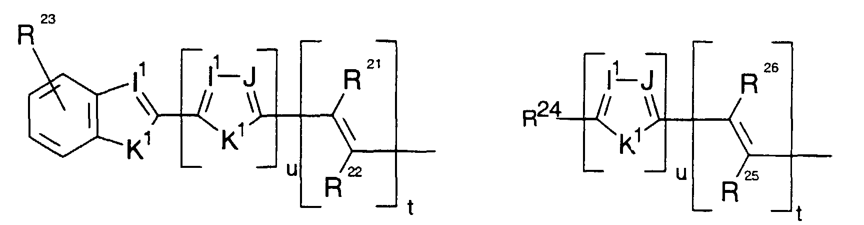 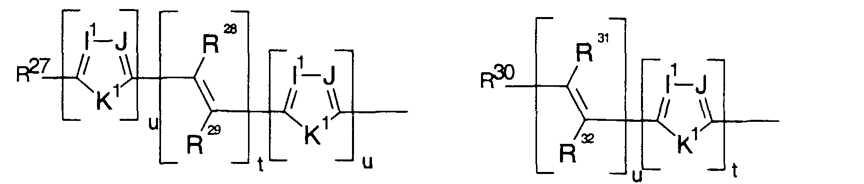 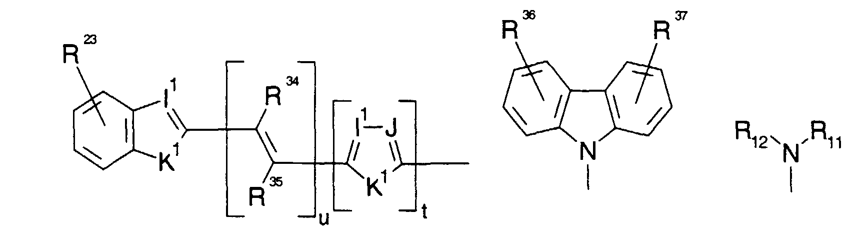
I¹, J, L, M are identical or different and are =CR³⁸-, =N-;
K¹, N¹ are identical or different and are -O-, -S-, CR³⁹R⁴⁰, -CR⁴¹=CR⁴²-, -NR⁴³-, -CR⁴⁴=N-;
R¹⁶-R⁴² are identical or different and are, identical or different from R¹, as defined for R¹ in the formula (I);
R⁴³, R⁴⁴ are identical or different and are, identical or different to R³, as defined for R³ in the formula (I);
q, r, s, t, u are identical or different and are 0, 1, 2, 3, 4 or 5, with the abovementioned compounds being excepted.

6. Use of a compound as claimed in one or more of claims 1 to 5 as electroluminescence material.

7. An electroluminescence material comprising one or more compounds as claimed in one or more of claims 1 to 5.

8. An electroluminescence material as claimed in claim 7 which is a light-emitting material, a charge transport material or a charge injection material.

9. A process for producing an electroluminescence material, which comprises applying one or more compounds as claimed in one or more of claims 1 to 5 in the form of a film to a substrate.

10. An electroluminescence device comprising one or more active layers, wherein at least one of these layers comprises one or more compounds as claimed in one or more of claims 1 to 5.

## Revendications

1. Composé conjugué, contenant des motifs structuraux de formule (I) : 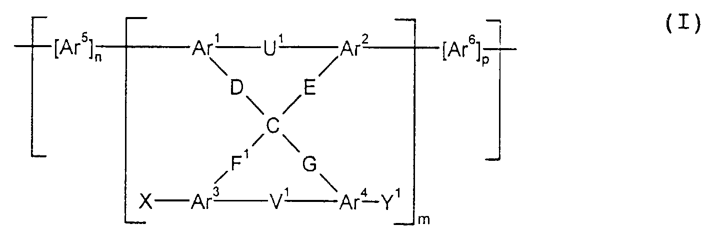 dans laquelle les symboles et indices ont les significations suivantes :
D, E, F¹, G, sont identiques ou différents et représentent -CR¹R¹-, -O-, -S-, -NR³- ou une liaison chimique ;
Ar¹, Ar², sont identiques ou différents et représentent un groupe benzènetriyle, thiophènetriyle, furanetriyle, pyrroletriyle, pyridinetriyle, pyrimidinetriyle, pyrazinetriyle ou pyridazinetriyle, chacun de ces groupes pouvant indépendamment des autres être substitué par 1 à 3 radicaux R⁴ identiques ou différents ;
Ar³, Ar⁴ sont identiques ou différents et ont les significations données pour Ar¹, Ar² sont des groupes cyclohexanetriyle, cyclopentanetriyle, cyclohexènetriyle ou cyclopentènetriyle, chacun de ces groupes pouvant indépendamment des autres être substitué par 1 à 3 radicaux R⁴ identiques ou différents ;
U¹, V¹ sont identiques ou différents et représentent -CR⁵=CR⁶-, -CR⁷R⁸-, -CR⁹R¹⁰-CR¹¹R¹²-, -NR¹³-, -SiR¹⁴R¹⁵-, -O-, -S-, -SO-, -SO₂-, -CO- ou une liaison chimique ;
Ar⁵, Ar⁶, X, Y¹ sont des groupes hydrocarbonés conjugués, cycliques ou acycliques, identiques ou différents, ayant de 2 à 100 atomes de carbone qui peuvent aussi contenir des hétéroatomes et qui peuvent être substitués par un ou plusieurs radicaux R⁴, X et/ou Y¹ pouvant aussi être identiques ou différents et représenter H ou R¹ ;
R¹, R², R⁵, R⁶, R⁷, R⁸, R⁹, R¹⁰, R¹¹, R¹² sont identiques ou différents et représentent H, un groupe alkyle à chaîne droite ou ramifiée ayant de 1 à 22 atomes de carbone, un ou plusieurs groupes -CH₂-, de préférence un, pouvant être remplacés par -O-, -CO-O-, -O-CO- et un ou plusieurs atomes d'hydrogène pouvant être remplacés par F, ou représentent un groupe aryle ou aryloxy, qui peut aussi contenir des hétéroatomes et qui peut être substitué par un ou plusieurs radicaux R⁶ ; ou représentent Br, Cl, F, CN, NO₂, CF₃, chacune des paires R¹ et R², R⁷ et R⁸, R⁹ et R¹⁰, ainsi que R¹¹ et R¹², pouvant former un système cyclique ;
R³, R¹⁴, R¹⁵ sont identiques ou différents et représentent H ou un groupe alkyle à chaîne droite ou ramifiée ayant de 1 à 22 atomes de carbone, auquel cas aussi un ou plusieurs groupes CH₂ qui ne sont pas directement liés à N peuvent être remplacés par -O-, -CO-O-, -O-CO-, ou représentent un groupe aryle ayant de préférence de 2 à 20 atomes de carbone, qui peut aussi contenir des hétéroatomes et qui peut être substitué par un ou plusieurs radicaux R⁴ identiques ou différents ;
les radicaux R⁴ sont identiques ou différents et représentent F, Cl, Br, CN, NO₂, CF₃ ou un groupe alkyle à chaîne droite ou ramifiée ayant de 1 à 22 atomes de carbone, dans lequel aussi un ou plusieurs groupes CH₂ qui ne sont pas directement liés les uns aux autres peuvent être remplacés par -O-, -CO-O-, -O-CO- et aussi un ou plusieurs atomes d'hydrogène pouvant être remplacés par F ;
m vaut 1, 2, 3 ou 4 ;
n, p sont identiques ou différents et valent 0, 1, 2, 3 ou 4 ;
à l'exception des composés suivants :
a) les composés dans lesquels Ar¹, Ar², Ar³ et Ar⁴ sont des groupes benzènetriyle, D, E, F¹, G, U¹ et V¹ sont des liaisons simples, et X et Y¹ sont des groupes hydrocarbonés conjugués cycliques ou acycliques qui peuvent aussi contenir des hétéroatomes et qui peuvent aussi être substitués, et
b) le poly[2,7-(9,9'-spirobifluorénylène)-4,4'-biphénylène] 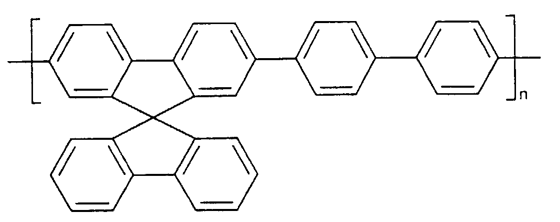 et
le poly-2,7-(9,9'-spirobifluorèn)ylène

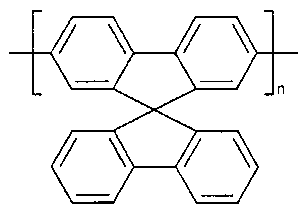

2. Composé conjugué selon la revendication 1, caractérisé en ce qu'il présente de 2 à 1000 motifs structuraux de formule (I).

3. Composé conjugué selon les revendications 1 et/ou 2, caractérisé en ce qu'il présente différents motifs structuraux de formule (I).

4. Composé conjugué selon l'une ou plusieurs des revendications précédentes, caractérisé en ce que les symboles et indices dans la formule (I) ont les significations suivantes :
Ar⁵, Ar⁶ sont identiques ou différents et représentent chacun 1 à 5 groupes arylène et/ou hétéroarylène et/ou vinylène identiques ou différents, qui peuvent être éventuellement substitués ;
m vaut 1, et
n, p sont identiques ou différents et valent 0 ou 1,
à l'exception des composés mentionnés ci-dessus.

5. Composé conjugué selon l'une ou plusieurs des revendications précédentes, caractérisé en ce que les symboles et indices de la formule (I) ont les significations suivantes :
Ar¹, Ar², Ar³, Ar⁴ sont identiques ou différents et représentent des groupes benzènetriyle, pyridinetriyle, thiophènetriyle, pyrazinetriyle ou pyrimidinetriyle ;
Ar⁵, Ar⁶ sont identiques ou différents et représentent : 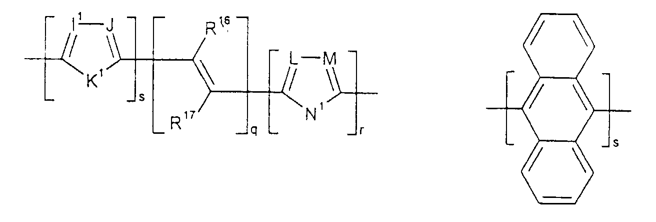 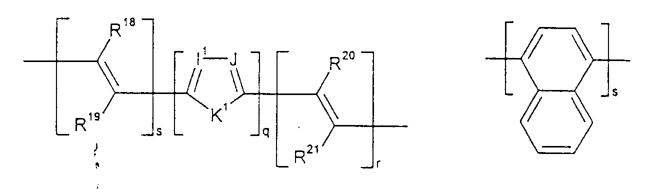 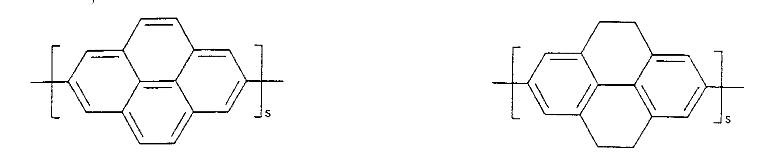 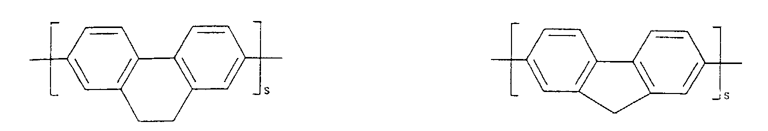
X, Y¹ sont identiques ou différents et représentent H, un groupe alkyle à chaîne droite ou ramifiée ayant de 1 à 22 atomes de carbone, un ou plusieurs groupes -CH₂- pouvant être remplacés par -O-, -CO-O-, -O-CO- et un ou plusieurs atomes d'hydrogène pouvant être remplacés par F ; ou représentent Br, Cl, F, CN, NO₂, CF₃ ou 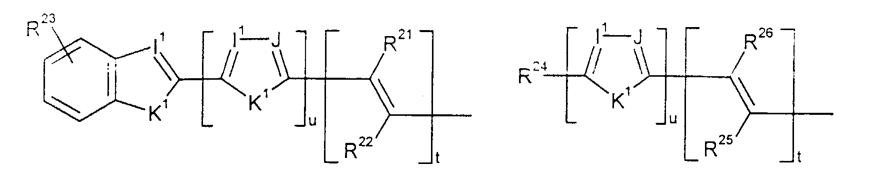 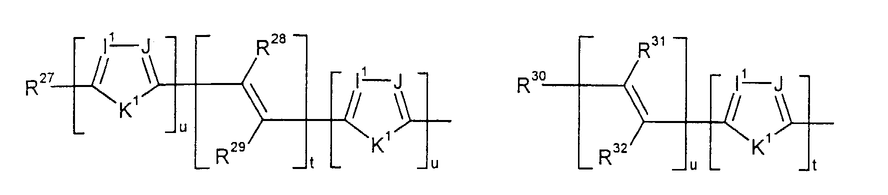 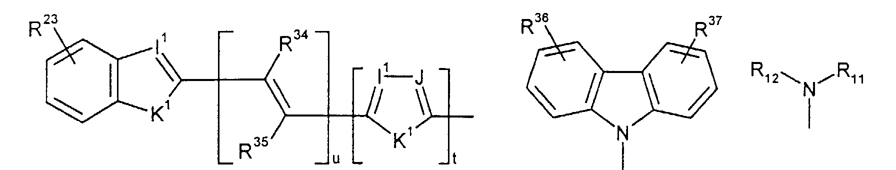
I¹, J, L, M sont identiques ou différents et représentent =CR³⁸-, =N- ;
K¹, N¹ sont identiques ou différents et représentent -O-, -S-, -CR³⁹R⁴⁰-, -CR⁴¹=CR⁴²-, -NR⁴³-, -CR⁴⁴=N- ;
R¹⁶-R⁴² sont identiques ou différents et, identiques à R¹ ou différents de R¹, ont les mêmes significations que R¹ dans la formule (I) ;
R⁴³, R⁴⁴ sont identiques ou différents et, identiques à R³ ou différents de R³, ont les mêmes significations que R³ dans la formule (I) ;
q, r, s, t, u sont identiques ou différents et représentent 0, 1, 2, 3, 4 ou 5, à l'exception des composés indiqués ci-dessus.

6. Utilisation d'un composé selon l'une ou plusieurs des revendications 1 à 5 en tant que matériau électroluminescent.

7. Matériau électroluminescent contenant un ou plusieurs composés selon l'une ou plusieurs des revendications 1 à 5.

8. Matériau électroluminescent selon la revendication 7, caractérisé en ce qu'il s'agit d'un matériau émetteur de lumière, d'un matériau de transport de charges ou d'un matériau d'injection de charges.

9. Procédé de fabrication d'un matériau électroluminescent, caractérisé en ce qu'on applique sur un substrat un ou plusieurs composés selon l'une ou plusieurs des revendications 1 à 5, sous forme d'un film.

10. Dispositif électroluminescent ayant une ou plusieurs couches actives, au moins l'une de ces couches contenant un ou plusieurs composés selon l'une ou plusieurs des revendications 1 à 5.
